# EUROPEAN PATENT APPLICATION

(11) **EP 4 629 149 A1**
(43) Date of publication of application: **08.10.2025**
(21) Application number: 25165339.0
(22) Date of filing: 21.03.2025
(51) Int. Cl.: G06Q 10/10, G06F 16/34, G06F 16/683, G06F 40/30, G06F 40/58, G06N 20/00

(54) **METHOD, APPARATUS, SYSTEM, AND COMPUTER PROGRAM FOR PROVIDING MEETING RECORD SERVICES**

(30) Priority: 25.03.2024 KR 20240040246; 22.05.2024 KR 20240066568
(71) Applicant: Samsung SDS Co., Ltd., Seoul 05510 (KR)
(72) Inventor: Kim, Yonghee, 05510 Seoul (KR); Yoon, Heetae, 05510 Seoul (KR); Cha, Dongho, 05510 Seoul (KR)
(74) Representative: Grünecker Patent- und Rechtsanwälte PartG mbB

(57) **Abstract**

A method, apparatus, system, and non-transitory computer program for providing a meeting record service is provided. The method includes determining a first task that a user wishes to perform from among multiple types of predetermined tasks, based on a user input, by implementing an artificial intelligence model in a task determination device, performing the determined first task, based on the meeting record, by implementing the artificial intelligence model in a first task device corresponding to the first task, and providing a result of performing the determined first task to the user.

## Description

### CROSS-REFERENCE TO RELATED APPLICATIONS

This application claims the benefit under 35 U.S.C. 119 of Korean Patent Application No. 10-2024-0040246, filed on March 25, 2024, and Korean Patent Application No. 10-2024-0066568, filed on May 22, 2024, in the Korean Intellectual Property Office, the entire disclosures of which are incorporated by reference for all purposes.

### BACKGROUND

### 1. Field

The following description relates to a method, apparatus, system, and computer program for providing meeting record services and, more specifically, to a method, apparatus, system, and computer program for providing a meeting record service, which identifies a user's intention from user input and accurately and efficiently providing various services for meeting records on the basis of the user's intention.

### 2. Description of Related Art

Recently, as online video conferencing has become widely used, services based on video conferencing, such as writing and providing meeting records such as transcripts or providing summaries or translations of meeting records based on artificial intelligence models such as large language models (LLMs) or the like, have been actively provided.

However, as more diverse video conferencing-based services are recently demanded, it is beneficial to accurately identify the services intended by users in conversations with users and accurately apply conditions according thereto, thereby providing efficient services.

However, in typical video conferencing-based services, even if specific conditions for services are requested, such as requesting a summary for a specific speaker or output in a set tone, while requesting a summary of meeting records such as transcripts for general video conferencing from an artificial intelligence model, users did not often receive accurate results according to the conditions they requested, such as containing comments from other participants or providing output that does not conform to the conditions.

Accordingly, it is desirous to have a method that accurately identifies users' intentions to provide services that conform to the users' wishes and effectively responding to various conditions requested by users, thereby providing accurate results, but no appropriate solution has been presented yet.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In a general aspect, a method for providing a service based on a meeting record with a computing device comprises determining, by a task determination device, a first task that a user wishes to perform from among multiple types of predetermined tasks, based on a user input, by implementing an artificial intelligence model; performing the determined first task by a first task device corresponding to the first task, based on the meeting record, by implementing the artificial intelligence model; and providing a result of performing the determined first task to the user.

In the determining of the first task, the task determination device is configured to determine the first task from among multiple types of tasks comprising one or more of: a summarization task configured to summarize the meeting record to conform to a requirement of the user and provide the meeting record; a question and answer task configured to provide a response to a question of the user, based on the meeting record; and a post-task configured to modify the result to conform to the user's requirement or translate the result into a specified language and provide the translated result.

In the performing of the determined first task, a summarization task device, which is configured to perform the summarization task, is configured to perform the operations of: splitting a meeting material on which the summarization task is to be performed into a plurality of unit meeting materials in consideration of specifications of the artificial intelligence model; producing a plurality of unit summary materials by summarizing the respective unit meeting materials by implementing the artificial intelligence model; and merging the plurality of unit summary materials to produce a summary material for the meeting material.

The summarization task device may be configured to perform the summarization task on the plurality of unit meeting materials in parallel, by implementing the artificial intelligence model.

In the performing of the first task, a summarization task device, which is configured to perform the summarization task, may be configured to perform one or more summarization tasks among multiple types of summarization tasks comprising: a specific-speaker summarization task configured to perform summarization for a specific speaker selected by the user from the meeting record; an action item summarization task configured to summarize content of an action item to be performed by one or more persons in charge from the meeting record; and a condition summarization task configured to perform summarization of the meeting record by applying conditions specified by the user.

The summarization task device may be configured to perform the two or more types of summarization tasks in parallel, by implementing the artificial intelligence model when two or more types of summarization tasks are requested among the multiple types of summarization tasks.

The specific-speaker summarization task may include configuring a specific-speaker meeting record by separating an area corresponding to the specific speaker from the meeting record; and performing summarization, based on the specific-speaker meeting record, by implementing the artificial intelligence model.

The summarization task device may be configured to perform the multiple types of summarization tasks, using multiple types of prompts which are configured corresponding to the multiple types of summarization tasks.

In the performing of the first task, a post-task device, which is configured to perform the post-task, is configured to perform the operations of: identifying an intention of the user, based on the user input, to determine a first language to translate the result by implementing the artificial intelligence model; and translating the result into the first language.

An apparatus for providing a service based on a meeting record includes one or more processors; and a memory, wherein the memory stores code which, when executed by the one or more processors, configures the apparatus to implement specific operations including: determining, by a task determination device, a first task that a user wishes to perform from among multiple types of predetermined tasks, based on a user input, by implementing an artificial intelligence model; performing the first task by a first task device corresponding to the first task, based on the meeting record, by implementing the artificial intelligence model; and providing a result of performing the determined first task to the user.

In the determining of the first task, the task determination device is configured to determine the first task from among multiple types of tasks comprising one or more of: a summarization task configured to summarize the meeting record to conform to the a requirement of the user and provide the meeting record; a question and answer task configured to provide a response to a question of the user, based on the meeting record; and a post-task configured to modify the result to conform to the user's requirements or translate the result into a specified language and provide the translated result.

In the performing of the first task, a summarization task device, which is configured to perform the summarization task, is configured to: split a meeting material on which the summarization task is to be performed into a plurality of unit meeting materials in consideration of specifications of the artificial intelligence model, produce a plurality of unit summary materials by summarizing the respective unit meeting materials by implementing the artificial intelligence model, and merge the plurality of unit summary materials to produce a summary material for the meeting material.

The summarization task device may be configured to perform the summarization task on the plurality of unit meeting materials in parallel, by implementing the artificial intelligence model.

In the performing of the first task, a summarization task device, which is configured to perform the summarization task, may be configured to perform one or more summarization tasks among multiple types of summarization tasks comprising: a specific-speaker summarization task configured to perform summarization for a specific speaker selected by the user from the meeting record; an action item summarization task configured to summarize content of an action item to be performed by one or more persons in charge from the meeting record; and a condition summarization task configured to perform summarization of the meeting record by applying conditions specified by the user.

The summarization task device may be configured to perform the two or more types of summarization tasks in parallel by implementing the artificial intelligence model when two or more types of summarization tasks are requested among the multiple types of summarization tasks.

The specific-speaker summarization task may include: configuring a specific-speaker meeting record by separating an area corresponding to the specific speaker from the meeting record; and performing summarization, based on the specific-speaker meeting record, by implementing the artificial intelligence model.

The summarization task device may be configured to perform the multiple types of summarization tasks, using multiple types of prompts which are configured to correspond to the multiple types of summarization tasks.

In the performing of the first task, a post-task device, which may be configured to perform the post-task, may be configured to perform the operations of: identifying an intention of the user, based on the user input, to determine a first language to translate the result by implementing the artificial intelligence model; and translating the result into the first language.

A non-transitory computer-readable storage medium storing code which, when executed by one or more processors, configures the one or more processors to: determine a first task that a user wishes to perform from among multiple types of predetermined tasks, based on a user input, by implementing an artificial intelligence model in a task determination device; perform the determined first task, based on the meeting record, by implementing the artificial intelligence model in a first task device corresponding to the first task; and provide a result of performing the determined first task to the user.

In the determining of the first task, the task determination device is configured to determine the first task from among multiple types of tasks comprising one or more of: a summarization task configured to summarize the meeting record to conform to a requirement of the user and provide the meeting record; a question and answer task configured to provide a response to a question of the user, based on the meeting record; and a post-task configured to modify the result to conform to the user's requirements or translate the result into a specified language and provide the translated result.

Other features and aspects will be apparent from the following detailed description, the drawings, and the claims.

### BRIEF DESCRIPTION OF DRAWINGS

FIG. 1 is a drawing illustrating the configuration of a meeting record service providing system, in accordance with one or more embodiments.
FIG. 2 is a flowchart illustrating a meeting record service providing method, in accordance with one or more embodiments.
FIG. 3 illustrates a specific configuration and operation of a meeting record service providing system, in accordance with one or more embodiments.
FIG. 4 illustrates an operation in which a meeting record service providing system determines a first task that a user wishes to perform, in accordance with one or more embodiments.
FIG. 5 is a drawing illustrating a specific configuration and operation of a summarization device that summarizes meeting records in a meeting record service providing system, in accordance with one or more embodiments.
FIG. 6 is a drawing illustrating an operation in which a meeting record service providing system performs a specific-speaker summarization task, in accordance with one or more embodiments.
FIG. 7 is a diagram illustrating an operation in which a meeting record service providing system performs a condition summarization task, in accordance with one or more embodiments.
FIG. 8 is a diagram illustrating an operation in which a meeting record service providing system performs a post-task, in accordance with one or more embodiments.
FIG. 9 is a diagram illustrating the configuration of a computing device providing a meeting record service, in accordance with one or more embodiments.

Throughout the drawings and the detailed description, unless otherwise described, the same reference numerals refer to the same elements. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences within and/or of operations described herein are merely examples, and are not limited to those set forth herein, but may be changed as will be apparent after an understanding of the disclosure of this application, except for sequences within and/or of operations necessarily occurring in a certain order. As another example, the sequences of and/or within operations may be performed in parallel, except for at least a portion of sequences of and/or within operations necessarily occurring in an order, e.g., a certain order. Also, descriptions of features that are known after an understanding of the disclosure of this application may be omitted for increased clarity and conciseness.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Regardless of the reference numerals, identical or similar components will be assigned the same reference numerals, and redundant descriptions thereof will be omitted. The terms "device" and "unit" used for components in the following description are assigned or used interchangeably in consideration of the ease of drafting the specification, and do not have distinct meanings or roles in themselves, and may indicate software or hardware components.

Throughout the specification, when a component or element is described as "on," "connected to," "coupled to," or "joined to" another component, element, or layer, it may be directly (e.g., in contact with the other component, element, or layer) "on," "connected to," "coupled to," or "joined to" the other component element, or layer, or there may reasonably be one or more other components elements, or layers intervening therebetween. When a component or element is described as "directly on", "directly connected to," "directly coupled to," or "directly joined to" another component element, or layer, there can be no other components, elements, or layers intervening therebetween. Likewise, expressions, for example, "between" and "immediately between" and "adjacent to" and "immediately adjacent to" may also be construed as described in the foregoing.

In addition, when describing the embodiments disclosed in this specification, a specific description of a related known technology, which may obscure the subject matter of the embodiments disclosed in this specification, will be omitted. In addition, the attached drawings are only intended to facilitate easy understanding of the embodiments disclosed in this specification, and the technical ideas disclosed in this specification are not limited to the attached drawings, and should be understood to encompass all modifications, equivalents, or substitutes included in the scope of the disclosure.

The terminology used herein is for describing various examples only and is not to be used to limit the disclosure. The articles "a," "an," and "the" are intended to include the plural forms as well, unless the context clearly indicates otherwise. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof, or the alternate presence of an alternative stated features, numbers, operations, members, elements, and/or combinations thereof. Additionally, while one embodiment may set forth such terms "comprise" or "comprises," "include" or "includes," and "have" or "has" specify the presence of stated features, numbers, operations, members, elements, and/or combinations thereof, other embodiments may exist where one or more of the stated features, numbers, operations, members, elements, and/or combinations thereof are not present.

As used herein, the term "and/or" includes any one and any combination of any two or more of the associated listed items. The phrases "at least one of A, B, and C", "at least one of A, B, or C", and the like are intended to have disjunctive meanings, and these phrases "at least one of A, B, and C", "at least one of A, B, or C", and the like also include examples where there may be one or more of each of A, B, and/or C (e.g., any combination of one or more of each of A, B, and C), unless the corresponding description and embodiment necessitates such listings (e.g., "at least one of A, B, and C") to be interpreted to have a conjunctive meaning.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application. The use of the term "may" herein with respect to an example or embodiment (e.g., as to what an example or embodiment may include or implement) means that at least one example or embodiment exists where such a feature is included or implemented, while all examples are not limited thereto. The use of the terms "example" or "embodiment" herein have a same meaning (e.g., the phrasing "in one example" has a same meaning as "in one embodiment", and "one or more examples" has a same meaning as "in one or more embodiments").

Hereinafter, examples of a meeting record service providing method, apparatus, system, and computer program, in accordance with one or more embodiments, will be described in detail with reference to the attached drawings.

One or more examples may provide a meeting record service providing method, apparatus, system, and computer program that accurately identifies a users' intention and provides a service that conforms to the users' wishes.

One or more example may also provide a meeting record service providing method, apparatus, system, and computer program that effectively responds to the services and various conditions requested by the user and provides accurate results.

One or more example may also provide a meeting record service providing method, apparatus, system, and computer program that provides accurate results by reflecting specific conditions, such as a summary of a specific speaker, a summary of an action item to be performed, a specific tone, or a translation language, for meeting records such as transcripts.

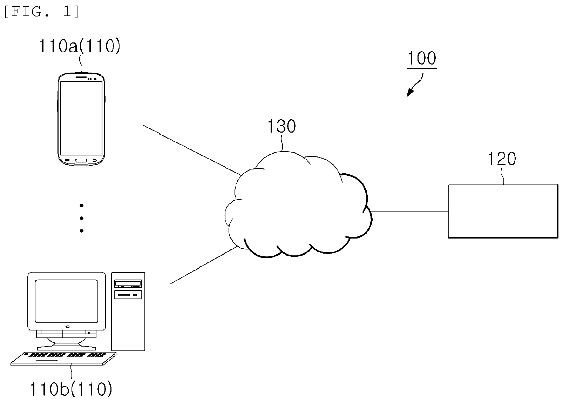

FIG. 1 illustrates the configuration and operation of a meeting record service providing system 100, in accordance with one or more embodiments.

As shown in FIG. 1, the meeting record service providing system 100 according to an embodiment may be configured to include one or more user terminals 110a and 110b and a meeting record service providing apparatus 120 that is interlinked with the terminals 110a and 110b and provides various services based on meeting records such as transcripts generated in an online conference upon request by the user.

In this example, various terminals such as personal computers (PCs), laptop PCs, tablet PCs, smartphones, PDAs, and the like, as only examples, may be used as the terminals 110a and 110b to allow users to input texts requesting service provision based on meeting records or provide results obtained based on the same, but the examples are not necessarily limited thereto, and various devices such as servers that are configured to provide information necessary to provide meeting record services may be used as the terminals 110a and 110b.

In addition, the meeting record service providing apparatus 120 may be implemented using one or more servers, but the examples are not necessarily limited thereto, and it may also be configured using personal computer processing devices such as desktop computers, laptops, tablets, smartphones, or the like, and it may be implemented in various forms such as configuration based on a cloud system or configuration using a dedicated device.

Furthermore, the terminals 110a and 110b and the meeting record service providing apparatus 120 may be implemented to be integrated using the same server or the like.

In addition, a wired network or a wireless network may be used as a network 130 connecting the terminals 110a and 110b and the meeting record service providing apparatus 120 in FIG. 1, and specifically, the network may be implemented using various communication networks such as a local area network (LAN), a metropolitan area network (MAN), and a wide area network (WAN), as examples. In addition, the network 130 may include the well-known World Wide Web (WWW), and furthermore, the network 130 may also be implemented using a data bus configured to transmit and receive data.

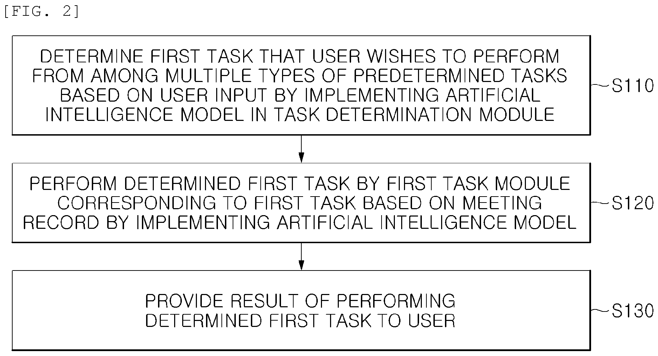

In addition, FIG. 2 illustrates a flowchart of a meeting record service providing method according to an embodiment of the disclosure.

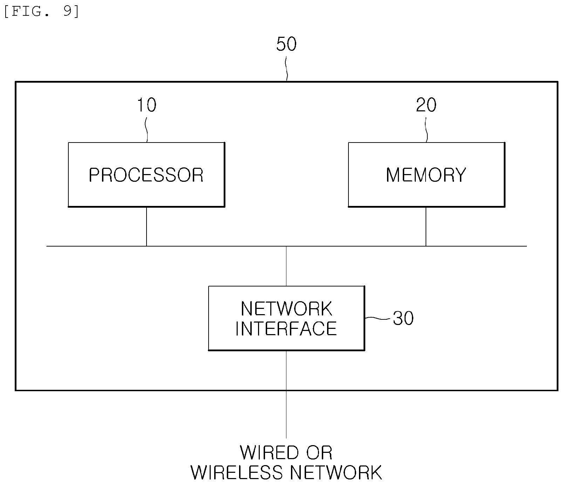

Here, the method illustrated in FIG. 2 may be performed by, for example, a meeting record service providing apparatus 120, and the meeting record service providing apparatus 120 may be implemented to include a computing device 50 in FIG. 9 or description made with reference to FIG. 9. For example, the meeting record service providing apparatus 120 may be equipped with a processor 10, and the processor 10 may execute code or instructions configured to implement operations to generate a work process to perform a given target work.

More specifically, as shown in FIG. 2, a method for providing a meeting record service using the computing device 50 according to an embodiment may include an operation S110 of determining a first task that a user wishes to perform from among multiple types of predetermined tasks, based on a user input, using an artificial intelligence model in a task determination device, an operation S120 of performing the first task, based on the meeting record, using the artificial intelligence model in a first task device corresponding to the first task, and an operation S130 of providing a result of performing the first task to the user.

Here, in the operation S110 of determining the first task, the task determination device may determine the first task from among multiple types of tasks including one or more of a summarization task configured to summarize the meeting record to conform to the user's requirement and provide it, a question and answer task configured to provide a response to a user's question, based on the meeting record, and a post-task configured to modify the result to conform to the user's requirements or translate it into a specified language and provide it.

In addition, in the operation S120 of performing the first task, a summarization task device performing the summarization task may split a meeting material on which the summarization task is to be performed into a plurality of unit meeting materials in consideration of specifications of the artificial intelligence model, produce a plurality of unit summary materials by summarizing the respective unit meeting materials using the artificial intelligence model, and then merge the plurality of unit summary materials to produce a summary material for the meeting material.

In addition, the summarization task device may perform the summarization task on the plurality of unit meeting materials in parallel using the artificial intelligence model.

In addition, in the operation S120 of performing the first task, a summarization task device performing the summarization task may perform one or more summarization tasks among multiple types of summarization tasks including a specific-speaker summarization task configured to perform summarization for a specific speaker selected by the user from the meeting record, an action item summarization task configured to summarize content of an action item to be performed by one or more persons in charge from the meeting record, and a condition summarization task configured to perform summarization of the meeting record by applying conditions specified by the user.

In this example, the summarization task device may perform, if two or more types of summarization tasks are requested among the multiple types of summarization tasks, the two or more types of summarization tasks in parallel using the artificial intelligence model.

In addition, the specific-speaker summarization task may configure a specific-speaker meeting record by separating an area corresponding to the specific speaker from the meeting record and perform summarization, based on the specific-speaker meeting record, using the artificial intelligence model.

In addition, the summarization task device may perform the multiple types of summarization tasks using multiple types of prompts configured to correspond to the multiple types of summarization tasks.

In addition, in the operation S120 of performing the first task, a post-task device performing the post-task may identify an intention of the user, based on the user input, to determine a first language to translate the result using the artificial intelligence model, and translate the result into the first language.

Accordingly, the meeting record service providing method, apparatus, system, and computer program according to an embodiment may accurately identify the user's intention, thereby providing the service that conforms to the user's wishes, and effectively respond to the services and various conditions requested by the user, thereby providing accurate results, and more specifically, may provide accurate results by reflecting specific conditions, such as a summary of a specific speaker, a summary of an action item to be performed, a specific tone, or **a translation** language, for meeting records such as transcripts.

Hereinafter, the configuration and operation of the meeting record service providing method, apparatus, system, and computer program according to an embodiment will be described in more detail with reference to the respective drawings.

First, in operation S110, in a computing device 50 such as the meeting record service providing apparatus 120, a task determination device determines a first task that the user wishes to perform using an artificial intelligence model, from among multiple types of tasks that are predetermined, on the basis of a user input.

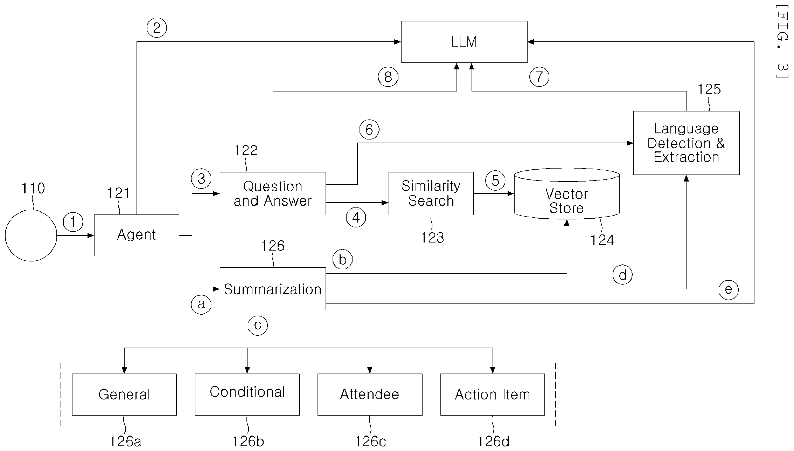

As a more specific example, as shown in FIG. 3, if the user wishes to generate a summary of each speaker's speech or an action item to be performed by each person in charge from the meeting records, such as transcripts, generated by converting the speeches of the respective speakers into text (Speech To Text, STT) in an online meeting, the user may enter the user's input, such as a user prompt, text, or voice, requesting that a task desired by the user be performed through a user interface (UI) provided in a user terminal 110 (① in FIG. 3), thereby requesting the meeting record service providing apparatus 120 to generate and provide a result according to the user's request.

More specifically, the meeting record service providing apparatus 120 of the one or more examples is provided with a task determination device 121 that operates as an agent and determines a first task that the user wishes to perform from among multiple types of predetermined tasks, based on the user input, using an artificial intelligence model 200 such as a large language model (LLM).

As a more specific example, as shown in FIG. 3, the meeting record service providing apparatus 120 may include a summarization task device 126 that summarizes meeting records to conform to the user's requirements and provides it, a question and answer task device 122 that provides a response to a user's question on the basis of the meeting records, and a post-task device 125 that modifies the result to conform to the user's requirements or translates it into a specified language and provides it.

Accordingly, the task determination device 121 may determine the first task that the user wishes to perform from among the multiple types of tasks using the artificial intelligence model 200 such as a large language model (LLM), based on the user input, and select a first task device corresponding to the first task so as to perform the task requested by the user.

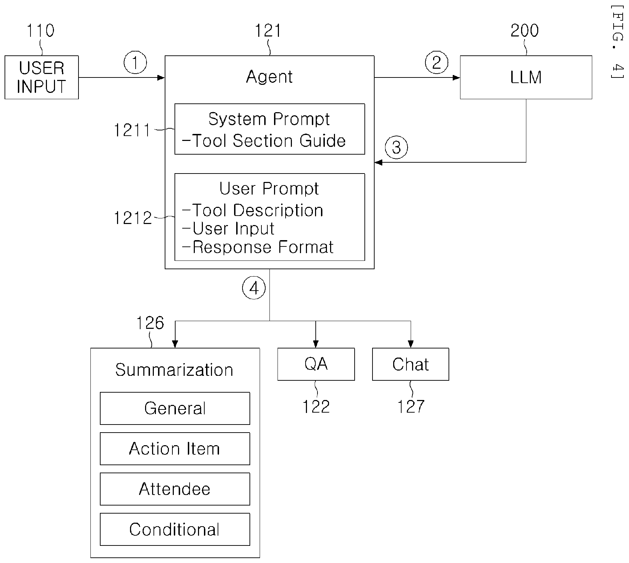

In this regard, as shown in FIG. 4, the task determination device 121 may configure a **first prompt** to determine the first task that the user wishes to perform, based on the user input (① in FIG. 4) provided through the terminal 110 and provide the first prompt to the artificial intelligence model 200 such as a large language model 661, thereby requesting the same to determine the first task that the user wishes to perform from among multiple types of tasks (② in FIG. 4).

As a more specific example, as shown in FIG. 4, the first prompt may be configured based on a system prompt 1211 including guide information to select a task device to perform the first task from among multiple types of task devices, and a user prompt including descriptions of the respective task devices and response formats of the user input and the artificial intelligence model 200.

Accordingly, the artificial intelligence model 200 such as the large language model 661 may determine the first task that the user wishes to perform from among the multiple types of tasks, based on the first prompt, and transmit a response (③ in FIG. 4).

Next, the task determination device 121 may select the summarization task device 126, the question and answer task device 122, or a conversation task device 127 that performs a conversation with the artificial intelligence model 200, based on the response of the artificial intelligence model 200, and perform the first task that the user wishes to perform (④ in FIG. 4).

As a more specific example, if the task determination device 121 determines that the user wishes to perform a conversation or free query using the artificial intelligence model 200 such as a large language model (LLM), the task determination device 121 may perform a conversation with the artificial intelligence model 200 using the conversation task device 127 (② in FIG. 3).

In addition, if the task determination device 121 selects the question and answer task device 122 (③ in FIG. 3), the question and answer task device 122 may configure the number of related unit documents (chunks) to be extracted for user questions and answers with respect to the similarity search device 123 (④ in FIG. 3), perform, based on the same, a similarity search between the user input and the meeting records such as transcripts using a database such as a vector store where the meeting records such as transcripts are stored (⑤ in FIG. 3), and provide a response to the user's question, based on the result, using the artificial intelligence model 200 and the like (⑧ in FIG. 3).

In this example, as shown in FIG. 3, the post-task device 125 may detect and extract the language requested by the user or the language used in the user input, based on the user input (⑥ **in** **FIG.** 3), and generate and provide a translation in the corresponding language using the artificial intelligence model 200, such as a large language model (LLM), or modify the tone, length, or the like thereof and provide the same (⑦ in FIG. 3).

Furthermore, if the task determination device 121 selects the summarization task device 126, the summarization task device 126 may receive the type of summarization task that the user wishes to perform, among the multiple types of summarization tasks, from the task determination device 121 (ⓐ in FIG. 3).

Next, as shown in FIG. 3, the summarization task device 126 may search for a target meeting record on which the summarization task is to be performed from the database 124 where the meeting records such as the transcripts are stored (ⓑ in FIG. 3).

Accordingly, the summarization task device 126 may apply the type of summarization task that the user wishes to perform to the target meeting record on which the summarization task is to be performed (ⓒ in FIG. 3), and perform the summarization task using the artificial intelligence model 200 such as a large language model (LLM) (ⓔ in FIG. 3).

Furthermore, the post-task device 125 may detect and extract the language requested by the user based on the user input or the language used in the user input from the summary generated in the summarization task device 126 (ⓓ in FIG. 3), and generate and provide a translation in the corresponding language using the artificial intelligence model 200, such as a large language model (LLM), or modify the tone, length, or the like thereof and provide the same (⑦ in FIG. 3).

Subsequently, in operation S120, the first task device corresponding to the first task selected in operation S110 may perform the first task, based on the meeting record, using the artificial intelligence model 200.

More specifically, as shown in FIG. 3, when the summarization task is performed in operation S120, the summarization task device 126 may select and perform a summarization task according to the user's intention from among multiple types of summarization tasks using a general summarization task device 126a that performs general summarization tasks, a specific-speaker summarization task device 126c that performs summarization for a specific speaker selected by the user from the meeting records, an action item summarization task device 126d that summarizes the content of an action item to be performed by one or more persons in charge from the meeting records, and a condition summarization task device 126b that performs **summarization** of the meeting record by applying conditions specified by the user.

In addition, when performing the summarization task, the summarization task device 126 may divide a meeting material to perform the summarization task into multiple unit meeting materials in consideration of the specifications of the artificial intelligence model 200, such as a large language model (LLM), produce multiple unit summary materials summarized for respective unit meeting materials using the artificial intelligence model 200, and then merge the multiple unit summary materials to produce a summary material for the meeting material.

In addition, in this example, the summarization task device 126 may perform the summarization task on the multiple unit meeting materials in parallel using the artificial intelligence model 200.

Furthermore, if two or more types of summarization tasks are requested among the multiple types of summarization tasks, the summarization task device 126 may perform the two or more types of summarization tasks in parallel using the artificial intelligence model 200.

In this example, the summarization task device 126 may perform the multiple types of summarization tasks using multiple types of prompts configured to correspond to the multiple types of summarization tasks, making it possible to perform the multiple types of summarization tasks more accurately and efficiently.

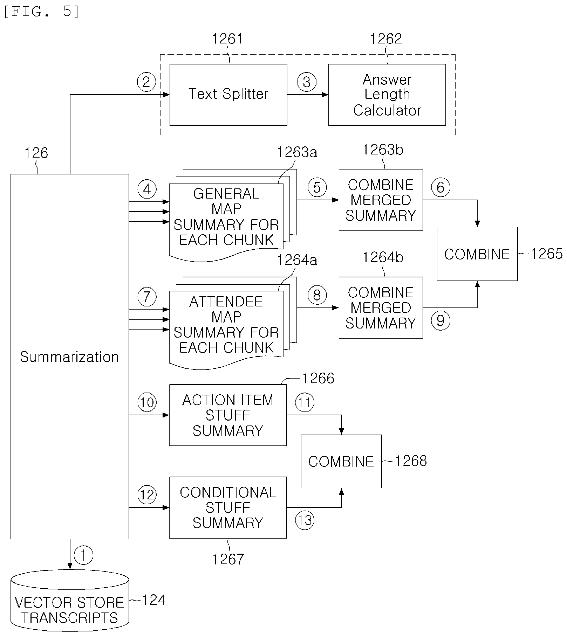

As a more specific example, as shown in FIG. 5, the summarization task device 126 searches for meeting materials, such as transcripts, on which the summarization task is to be performed from the database 124 such as a vector store (① in FIG. 5).

Next, the summarization task device 126 may split the meeting materials, using a text splitter 1261, into unit documents (chunks) of a size corresponding to a tokenizer of the artificial intelligence model 200 such as a large language model (LLM), and an answer length calculator 1262 may calculate the response size of the artificial intelligence model 200 in consideration of the token size of the artificial intelligence model 200 and the number of unit documents (chunks) (② and ③ in FIG. 5).

For example, if the maximum input size of the artificial intelligence model 200, such as a large language model (LLM), is 2,000 tokens, and if the meeting record is split into four unit documents (chunks) and processed in parallel, the summarization task device 126 may allocate 500 tokens for the maximum output size of the unit document (chunk) summarized in order to merge and summarize the four split unit documents (chunks) as input.

**Accordingly,** if the summarization task device 126 is to divide the meeting record such as the transcripts into multiple unit documents (chunks) and perform general summarization, the summarization task device 126 may produce unit summaries 1263a for the respective unit documents (chunk) (④ in FIG. 5), and then merge and summarize the respective unit summaries to produce a general summary 1263b for the meeting record (⑤ in FIG. 5).

In addition, if the summarization task device 126 is to perform summarization for a specific speaker or each speaker in parallel with general summarization of the meeting record such as transcripts, the summarization task device 126 may produce unit summaries 1264a for the respective unit documents (chunks) (⑦ in FIG. 5), and then merge and summarize the respective unit summaries to produce a summary 1264b for the specific speaker or each speaker (⑧ in FIG. 5).

Furthermore, the summarization task device 126 may combine the general summary 1263b of the meeting record and the summary 1264b for the specific speaker or each speaker, thereby generating an integrated summary 1265 (⑥ and ⑨ in FIG. 5).

In addition, the summarization task device 126 may perform action item summarization, instead of dividing the meeting record such as transcripts into the unit documents (chunks), to produce an action item summary 1266 for the meeting record (⑩ in FIG. 5).

In addition, the summarization task device 126 may perform condition summarization according to given conditions on the meeting record such as transcripts in parallel with the action item summarization, thereby producing a conditional summary 1267 for the meeting record (⑫ in FIG. 5), and further combine the action item summary 1266 and the conditional summary 1267 for the meeting record to generate an integrated summary 1268 (⑪ and ⑬ in FIG. 5).

As described above, the disclosure may not only divide the meeting record such as transcripts into multiple unit documents (chunks) and generate unit summaries for the respective unit documents (chunks) in parallel, and may then merge and summarize the respective unit summaries to generate an overall summary for the meeting record, but also simultaneously perform summary generation tasks according to multiple summarization methods in parallel, thereby more efficiently performing summarization tasks according to one or more summarization methods.

As a more specific example, FIG. 5 illustrates a method in which general summarization and speaker-specific summarization are processed in parallel using split unit documents **(chunks),** and at the same time, general summarization and speaker-specific summarization are processed in parallel, and then the produced general summary and speaker-specific summary are combined to generate an integrated summary, and also action item summarization and condition summarization are simultaneously processed in parallel, and then the produced action item summary and conditional summary are combined to generate an integrated summary. However, the examples are not necessarily limited thereto, and the examples may process summaries of meeting records such as transcripts more quickly and efficiently in various combinations, such as dividing a given meeting record such as transcripts into unit documents (chunks), processing speaker-specific summarization, action item summarization, and condition summarization in parallel, and then combining the speaker-specific summary, the action item summary, and the conditional summary to generate an integrated summary.

In addition, when performing the specific-speaker summarization task, the summarization task device 126 may separate an area corresponding to the specific speaker from the meeting record to configure a specific-speaker meeting record, and perform summarization using the artificial intelligence model 200, such as a large language model (LLM), based on the specific-speaker meeting record.

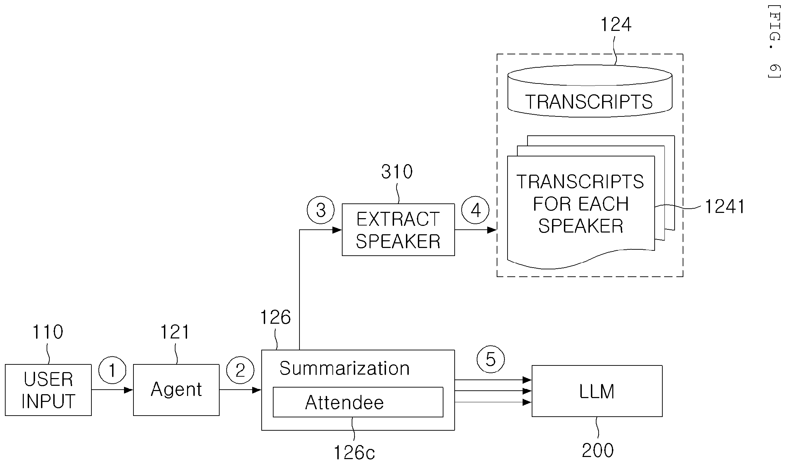

As a more specific example, as shown in FIG. 6, if the task determination device 121 determines that the summarization task for each speaker is to be performed, among multiple types of tasks, based on a user input (① in FIG. 6) provided through the terminal 110 or the like, the task determination device 121 may request the summarization task for each speaker from the summarization task device 126 (② in FIG. 6).

Accordingly, the summarization task device 126 may extract a speaker 310 to be summarized from the user input (③ in FIG. 6), and separate an area corresponding to the specific speaker, such as the speech content of the speaker to be summarized, from the meeting record, such as transcripts, stored in the database 124, thereby generating a speaker-specific meeting record 1241 (④ in FIG. 6).

Subsequently, the summarization task device 126 may perform summarization using the artificial intelligence model 200 such as a large language model (LLM) on the separated speaker-specific meeting record 1241 (⑤ in FIG. 6), so that the speech content of other speakers may be completely separated, thereby improving the accuracy of the summary for each speaker.

In addition, the summarization task device 126 may also perform summarization for the **meeting** record, such as the transcripts, by applying conditions specified by the user.

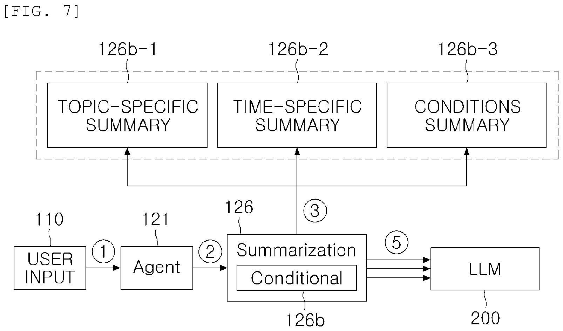

As a more specific example, as shown in FIG. 7, if the task determination device 121 determines that the condition summarization task is to be performed, among multiple types of tasks, based on a user input (① in FIG. 7) provided through the terminal 110 or the like, the task determination device 121 may request the condition summarization task from the summarization task device 126 (② in FIG. 7).

Accordingly, the summarization task device 126 may determine the summary conditions that the user wishes to perform from the user input (③ in FIG. 7), and perform summarization through the artificial intelligence model 200, such as a large language model (LLM), using a conditional summary prompt according to a topic-specific summary 126b-1, a time-specific summary 126b-2, and other conditions summary 126b-3 depending on the determined summary conditions (④ in FIG. 7).

Furthermore, in the disclosure, the post-task device 125 may also modify the result, such as a summary of the meeting record, such as transcripts, to conform to the user's requirements or translate it into a specified language and then provide the same.

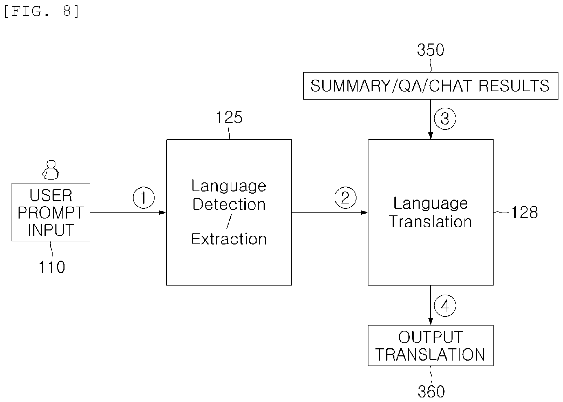

As a more specific example, as shown in FIG. 8, the post-task device 125 may detect the language used or specified in a user input (① in FIG. 8) provided through the terminal 110 or the like and extract the language (② in FIG. 8).

Accordingly, a translation device 125a of the post-task device 125 may translate the results 350 provided to the user (③ in FIG. 8), such as a summary of the meeting records such as transcripts, questions and answers, and conversations, into the language determined by the post-task device 125 and provide a translation 360 (④ in FIG. 8).

In this example, when translating the results 350, the post-task device 125 may translate, if the language to translate the results is specified in the user input, the results into the specified language and translate, if the language to translate the results is not specified in the user input, the results into the language used in the user input.

As a more specific example, if a translation language is not specified in a user input such as " 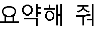 ", the post-task device 125 may detect the language (Korean) used in the user input and provide the result translated into Korean. On the other hand, if a translation language is specified in a user input such as "summarize in English", the post-task device 125 may extract the language (English) specified in the user input and provide the result translated into English.

Furthermore, the post-task device 125 may provide not only the translation of the result, but also the modification of the tone, length, or the like conforming to the user's requirements.

In addition, a computer program according to another aspect of the disclosure may be a computer program stored in a computer-readable medium for executing a series of steps of the meeting record service providing method in the meeting record service providing system 100 described above in a computer. The computer program may be not only a computer program including machine language codes created by a compiler, but also a computer program including high-level language codes executable in a computer using an interpreter or the like. In this case, the computer includes, in addition to a personal computer (PC) or a laptop computer, any type of information processing device equipped with a central processing unit (CPU) to execute a computer program, such as a server, a smartphone, a tablet PC, a PDA, or a mobile phone.

In addition, the computer-readable medium may be a medium that continuously stores a computer-executable program, or temporarily stores it for execution or download. In addition, the medium may be a variety of recording means or storage means in the form of a single piece of hardware or a combination of multiple pieces of hardware, and may not be limited to a medium directly connected to a computer system, but may also be distributed on a network. Therefore, the above detailed description should not be construed as limiting the disclosure in all respects and should be considered as examples. The scope of the disclosure should be determined by a reasonable interpretation of the appended claims, and all changes within the equivalent scope of the disclosure are included in the scope of the disclosure.

In addition, FIG. 9 illustrates a device 50 to which the proposed method of the disclosure may be applied.

Referring to FIG. 9, the device 50 may be configured to implement the meeting record service providing process in the meeting record service providing system 100 according to the proposed method of the disclosure.

For example, the device 50 to which the proposed method of the disclosure may be applied may include network devices such as repeaters, hubs, bridges, switches, routers, gateways, and the like, computer devices such as desktop computers, workstations, and the like, mobile terminals such as smartphones and the like, portable devices such as laptop computers and the like, home appliances such as digital TVs and the like, and moving means such as vehicles and the like. As another example, the device 50 to which the disclosure may be applied may be included as part of an ASIC (Application Specific Integrated Circuit) implemented in the form of an SoC (System-on-Chip).

The memory 20 may be connected to the processor 10 during operation, and may store programs and/or instructions for processing and controlling the processor 10, and may store data and information used in the disclosure, control information required for processing data and information according to the disclosure, and temporary data generated during the data and information processing process. The memory 20 may be implemented as a storage device such as a ROM (Read-Only Memory), a RAM (Random Access Memory), an EPROM (Erasable Programmable Read-Only Memory), an EEPROM (Electrically Erasable Programmable Read-Only Memory), a flash memory, a SRAM (Static RAM), an HDD (Hard Disk Drive), an SSD (Solid State Drive), and the like.

The processor 10 may be operatively connected to the memory 20 and/or the network interface 30, and may control the operation of respective devices in the device 50. In particular, the processor 10 may perform various control functions for performing the proposed method of the disclosure. The processor 10 may also be called a controller, a micro-controller, a microprocessor, a micro-computer, or the like. The proposed method of the disclosure may be implemented by hardware, firmware, software, or a combination thereof. When implementing the disclosure using hardware, an ASIC (application specific integrated circuit) or a DSP (digital signal processor), a DSPD (digital signal processing device), a PLD (programmable logic device), an FPGA (field programmable gate array), or the like, configured to perform the disclosure, may be provided in the processor 10. Meanwhile, when implementing the proposed method of the disclosure using firmware or software, the firmware or software may include instructions related to modules, procedures, or functions that perform functions or operations necessary for implementing the proposed method of the disclosure, and the instructions may be stored in the memory 20 or stored in a computer-readable recording medium (not shown) separate from the memory 20, and may be configured to cause, when executed by the processor 10, the device 50 to perform the proposed method of the disclosure.

In addition, the device 50 may include a network interface device 30. The network interface device 30 may be connected to the processor 10 during operation, and the processor 10 may control the network interface device 30 to transmit or receive wireless/wired signals carrying information, data, signals, and/or messages through a wireless/wired network. The network interface device 30 may support various communication standards such as IEEE 802 series, 3GPP LTE(-A), 3GPP 5G, etc., and may transmit and receive control information and/or data signals according to the corresponding communication standards. The network interface device 30 may be implemented outside the device 50 as needed.

Accordingly, the meeting record service providing method, apparatus, system, and computer program according to an embodiment of the disclosure may accurately identify the user's intention, thereby providing the service that conform to the user's wishes, and effectively respond to the services and various conditions requested by the user, thereby providing accurate results, and more specifically, may provide accurate results by reflecting specific conditions, such as a summary of a specific speaker, a summary of an action item to be performed, a specific tone, or a translation language, for meeting records such as transcripts.

The embodiments described in this specification and the attached drawings are merely examples and do not limit the scope of the disclosure in any way. In addition, the connections or connection members between the components illustrated in the drawings are examples of functional connections and/or physical or circuit connections, and may be represented as various functional connections, physical connections, or circuit connections that are replaceable or addible in an actual device. In addition, unless specifically stated with "essential", "important", etc., the components may not be essential for the application of the disclosure.

In the specification (particularly, in the claims) of the present disclosure, the term "the" and indication terms similar thereto may correspond to both a singular element and plural elements. In addition, if a range is stated in the disclosure, it encompasses embodiments to which respective values within the range are applied (unless otherwise stated), and the respective values constituting the range are regarded as being described in the detailed description of the disclosure. In addition, the steps presented in the method of the disclosure are not intended to be restricted in their sequence, and the sequence thereof may be appropriately changed as needed, unless a certain step must precede according to the nature of the process. All examples or the use of example terms (e.g., etc.) in the disclosure is merely intended to describe the disclosure in detail, and the scope of the disclosure is not limited to the examples or example terms, unless limited by the claims. In addition, those skilled in the art will understand that various modifications, combinations, and changes may be configured according to design conditions and elements without departing from the scope of the appended claims or their equivalents.

While this disclosure includes specific examples, it will be apparent after an understanding of the disclosure of this application that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above and all drawing disclosures, the scope of the disclosure is also inclusive of the claims and their equivalents, i.e., all variations within the scope of the claims and their equivalents are to be construed as being included in the disclosure.

## Claims

1. A method for providing a service based on a meeting record with a computing device, the method comprising:
determining, by a task determination device, a first task that a user wishes to perform from among multiple types of predetermined tasks, based on a user input, by implementing an artificial intelligence model;
performing the determined first task by a first task device corresponding to the first task, based on the meeting record, by implementing the artificial intelligence model; and
providing a result of performing the determined first task to the user.

2. The method of claim 1,
wherein in the determining of the first task,
the task determination device is configured to determine the first task from among multiple types of tasks comprising one or more of:
a summarization task configured to summarize the meeting record to conform to a requirement of the user and provide the meeting record;
a question and answer task configured to provide a response to a question of the user, based on the meeting record; and
a post-task configured to modify the result to conform to the user's requirement or translate the result into a specified language and provide the translated result.

3. The method of claim 2,
wherein in the performing of the determined first task,
a summarization task device, which is configured to perform the summarization task, is configured to perform the operations of:
splitting a meeting material on which the summarization task is to be performed into a plurality of unit meeting materials in consideration of specifications of the artificial intelligence model;
producing a plurality of unit summary materials by summarizing the respective unit meeting materials by implementing the artificial intelligence model; and
merging the plurality of unit summary materials to produce a summary material for the meeting material.

4. The method of claim 3,
wherein the summarization task device is configured to perform the summarization task on the plurality of unit meeting materials in parallel, by implementing the artificial intelligence model.

5. The method of claim 2,
wherein in the performing of the first task,
a summarization task device, which is configured to perform the summarization task, is configured to perform one or more summarization tasks among multiple types of summarization tasks comprising:
a specific-speaker summarization task configured to perform summarization for a specific speaker selected by the user from the meeting record;
an action item summarization task configured to summarize content of an action item to be performed by one or more persons in charge from the meeting record; and
a condition summarization task configured to perform summarization of the meeting record by applying conditions specified by the user.

6. The method of claim 5,
wherein the summarization task device is configured to perform the two or more types of summarization tasks in parallel, by implementing the artificial intelligence model when two or more types of summarization tasks are requested among the multiple types of summarization tasks.

7. The method of claim 5, wherein the specific-speaker summarization task comprises:
configuring a specific-speaker meeting record by separating an area corresponding to the specific speaker from the meeting record; and
performing summarization, based on the specific-speaker meeting record, by implementing the artificial intelligence model.

8. The method of claim 5,
wherein the summarization task device is configured to perform the multiple types of summarization tasks, using multiple types of prompts which are configured corresponding to the multiple types of summarization tasks.

9. The method of claim 2,
wherein in the performing of the first task,
a post-task device, which is configured to perform the post-task, is configured to perform the operations of:
identifying an intention of the user, based on the user input, to determine a first language to translate the result by implementing the artificial intelligence model; and
translating the result into the first language.

10. An apparatus for providing a service based on a meeting record, the apparatus comprising:
one or more processors; and
a memory,
wherein the memory stores code which, when executed by the one or more processors, configures the apparatus to implement specific operations comprising:
determining, by a task determination device, a first task that a user wishes to perform from among multiple types of predetermined tasks, based on a user input, by implementing an artificial intelligence model;
performing the first task by a first task device corresponding to the first task, based on the meeting record, by implementing the artificial intelligence model; and
providing a result of performing the determined first task to the user.

11. The apparatus of claim 10,
wherein, in the determining of the first task,
the task determination device is configured to determine the first task from among multiple types of tasks comprising one or more of:
a summarization task configured to summarize the meeting record to conform to a requirement of the user and provide the meeting record;
a question and answer task configured to provide a response to a question of the user, based on the meeting record; and
a post-task configured to modify the result to conform to the user's requirements or translate the result into a specified language and provide the translated result.

12. The apparatus of claim 11,
wherein, in the performing of the first task,
a summarization task device, which is configured to perform the summarization task, is configured to:
split a meeting material on which the summarization task is to be performed into a plurality of unit meeting materials in consideration of specifications of the artificial intelligence model,
produce a plurality of unit summary materials by summarizing the respective unit meeting materials by implementing the artificial intelligence model, and
merge the plurality of unit summary materials to produce a summary material for the meeting material.

13. The apparatus of claim 12,
wherein the summarization task device is configured to perform the summarization task on the plurality of unit meeting materials in parallel, by implementing the artificial intelligence model.

14. The apparatus of claim 11,
wherein, in the performing of the first task,
a summarization task device, which is configured to perform the summarization task, is configured to perform one or more summarization tasks among multiple types of summarization tasks comprising:
a specific-speaker summarization task configured to perform summarization for a specific speaker selected by the user from the meeting record;
an action item summarization task configured to summarize content of an action item to be performed by one or more persons in charge from the meeting record; and
a condition summarization task configured to perform summarization of the meeting record by applying conditions specified by the user.

15. A non-transitory computer-readable storage medium storing code which, when executed by one or more processors, configures the one or more processors to:
determine a first task that a user wishes to perform from among multiple types of predetermined tasks, based on a user input, by implementing an artificial intelligence model in a task determination device;
perform the determined first task, based on the meeting record, by implementing the artificial intelligence model in a first task device corresponding to the first task; and
provide a result of performing the determined first task to the user.
